Europäisches Patentamt

European Patent Office

Office européen des brevets

(11) Publication number: **0 042 657**
**A1**

(12) **EUROPEAN PATENT APPLICATION**

(21) Application number: **81300252.4**

(22) Date of filing: **21.01.81**

(51) Int. Cl.³: **F 16 B 15/00.**
**F 16 B 15/08, B 25 C 1/00**
**B 21 G 3/00**

(30) Priority: **19.06.80 GB 8020143**

(43) Date of publication of application:
**30.12.81 Bulletin 81/52**

(84) Designated Contracting States:
**AT BE CH DE FR IT LI LU NL SE**

(71) Applicant: **Rylands-Whitecross Limited**
**P.O. Box 29 Church Street**
**Warrington Cheshire WA1 2TW(GB)**

(72) Inventor: **Heesom, Albert**
**28 Holford Avenue**
**Bewsey Warrington Cheshire(GB)**

(74) Representative: **Dodd, David Michael et al,**
**ROYSTONS 531 Tower Building Water Street**
**Liverpool L3 1BA(GB)**

(54) **Improvements in or relating to nails and their method of manufacture.**

㊼ A nail, especially suitable for use with magazine-fed nailing machine, comprises a shank (12; 32) of oval cross-sectional shape and, at one end thereof, a head (16; 36). The head (16; 36) projects transversely to the shank (12; 32) except at one side at least thereof, specifically at a position of intersection of a minor axis plane with a notional geometric extension of the shank periphery. Such a head configuration allows a plurality of the nails to be collated in a strip, with their minor axes aligned with the plane of the strip, for use with a magazine-fed nailing machine. In a so-called "T" headed nail, the head (16) comprises an elongate portion having limbs (18; 20) projecting from the shank in the direction of the major axis. In a so-called "D" headed nail, the head (36) is an incomplete disc configured to permit collation of a plurality of the nails with shanks abutting and heads overlapping in stepped relation.

F I G.4.

F I G.6

EP 0 042 657 A1

Applicant:   Rylands-Whitecross Limited

Title:       Improvements in or relating to nails
             and their method of manufacture

## DESCRIPTION

This invention relates to nails, and to a method of making same, and is applicable especially, but not exclusively, to nails for use with magazine-fed nailing machines.

In such machines the nails are collated into strips, usually with their shanks abutting, and are fed to a reciprocating hammer member which strikes each nail in turn, separating it from the strip and driving it into the workpiece. In practice the size of the magazine is limited, especially for portable machines, yet it is desirable that it hold a large number of nails so that it need not be replenished frequently. Since ultimately the number of nails for a given strip length is determined by the shank diameter of each nail, this has led to the development and use, for nailing machines, of nails having a relatively small diameter. Consequently the maximum length of the nail is limited, as is the head strength, which results in reduced holding power.

An object of the present invention is to at least mitigate these problems.

According to one aspect of the present invention a nail comprises an elongate shank of oval cross-
sectional shape having major and minor transverse
axes and, at one end thereof, a head projecting
laterally from the shank, wherein a boundary portion
of the head lies on or within a notional geometric
extension of the shank periphery at least at one
position of intersection of said extension and a
minor axis plane thereof. Thus the nail head does not
project beyond the shank at one side so that a
plurality of such nails can be collated side-by-side,
preferably abutting, in a flat strip for use with
a nailing machine.

The nail may be in the form of a "T", and the
head may then comprise a transverse member no greater
in width, at least at a medial portion, than the
minor dimension of the oval shank. Thus the head
will not extend beyond the shank, in the direction of
the minor axis, at either side thereof. This allows
a plurality of such nails to be collated with their
shanks abutting along substantially their entire
length, conveniently to form a rectangular strip.

Alternatively the head may comprise a disc,
configured to permit collation of a plurality of the
nails with shanks abutting and heads overlapping in
stepped relation. For example the head may have a
recess extending from its periphery to the shank and
large enough to accommodate the shank of an adjacent nail. Alternatively, and preferably, the disc may be
an incomplete circle, having a chordal edge tangential
to the shank.

The shank may be serrated along at least part of
its length, and along one or both edges of the major
diameter of the oval section. The width of the serrations,
which will tend to increase when the serrations are
formed by deformation of the shank, should not exceed
the minor diameter of the shank. Preferably the
serrations have a buttress form i.e. each indent has
an inclined face extending in a plane at an acute angle
to the plane of the minor axis of the shank, and a
shoulder perpendicular to the shank longitudinal axis.

According to a second aspect of the invention
a method of making a nail of the first aspect includes
the step of forming at one end of a shank of oval
cross-sectional shape, a head projecting laterally
from the shank with a boundary portion of the head
lying on or within a notional geometric extension of
the shank periphery at least at one position of
intersection of said extension and a minor axis thereof.

Preferably the head is formed by upsetting an end
of the shank projecting from a die.

In a preferred embodiment the end projects into
a slot which is substantially equal to the minor
dimension of the shank. The punch then acts into the
slot to upset the projecting end to form the head.

The projecting end will thus be supported against deviation in the direction of its minor dimension during upsetting.

Embodiments of the invention will now be described, by way of example only, and with reference to the accompanying drawings, in which:-

Figures 1 and 2 are side and end views, respectively, of embodiments comprising a nail having an oval shank and "T" head;

Figure 3 is an enlarged perspective view of the head of the nail;

Figure 4 is a section on the line AA of the Figure 3;

Figure 5 shows a plurality of the nails collated into a strip for use in a nailing machine;

Figure 6 is an enlarged perspective view of the head portion of a second embodiment, comprising a nail having an oval shank and "D" shaped head;

Figure 7 is a cross-section on the line AA of Figure 6;

Figure 8 shows a plurality of the "D" head nails collated in a strip for use in a nailing machine;

Figure 9 is an end view of the strip of Figure 8;

Figure 10 is a plan view of the strip;

Figure 11 is a section on the line BB of Figure 8;

Figure 12 (a) to (d) illustrates the formation of the head of a nail with a round shank;

Figure 13 (a) to (d) corresponds to Figure 12 for an embodiment of the invention having an oval shank; and

Figure 14, on sheet 2 of the drawings, illustrates a modification applicable to either embodiment.

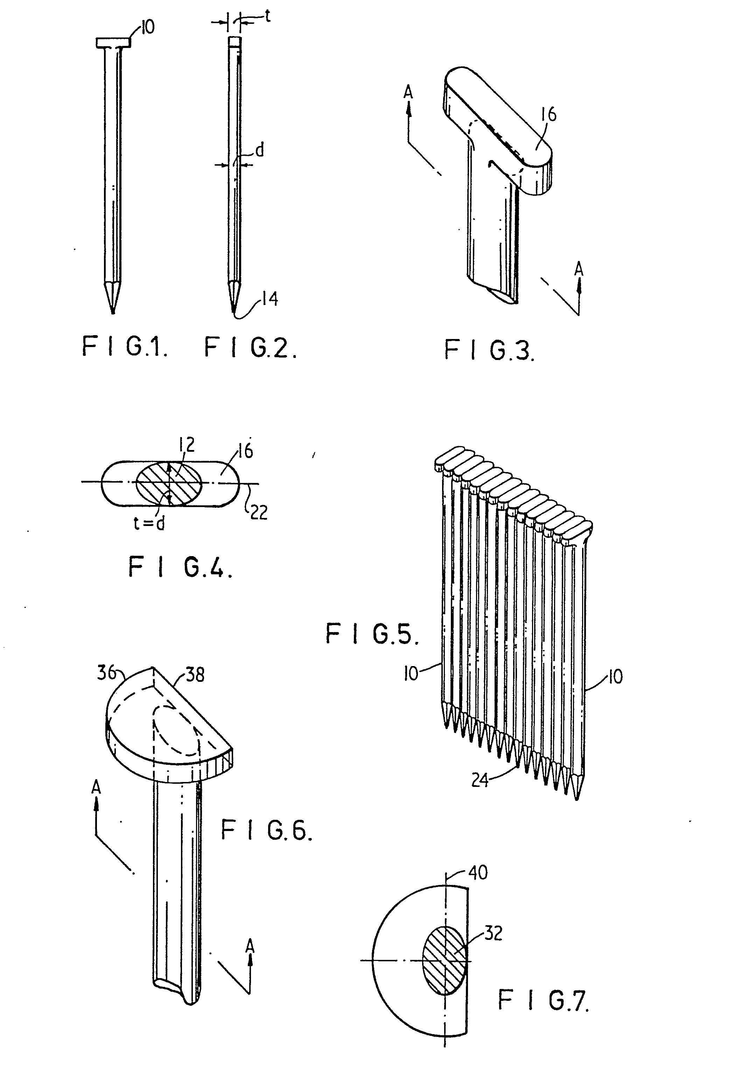

Referring to the embodiment shown in Figures 1 to 5, a steel nail 10 comprises a shank 12, of oval cross-section, having a point 14 at one end.

At the other end of the shank is formed a "T" head 16, comprising limbs 18 and 20 projecting transversely to the shank 12 in the direction of the major axis 22 of the shank 12.

The width "t" of the head 16 is equal to the minor diameter "d" of the oval shank 12. Thus, as shown in Figure 5, a number of nails can be collated with their shanks abutting to form a rectangular strip 24 for use with a nailing machine.

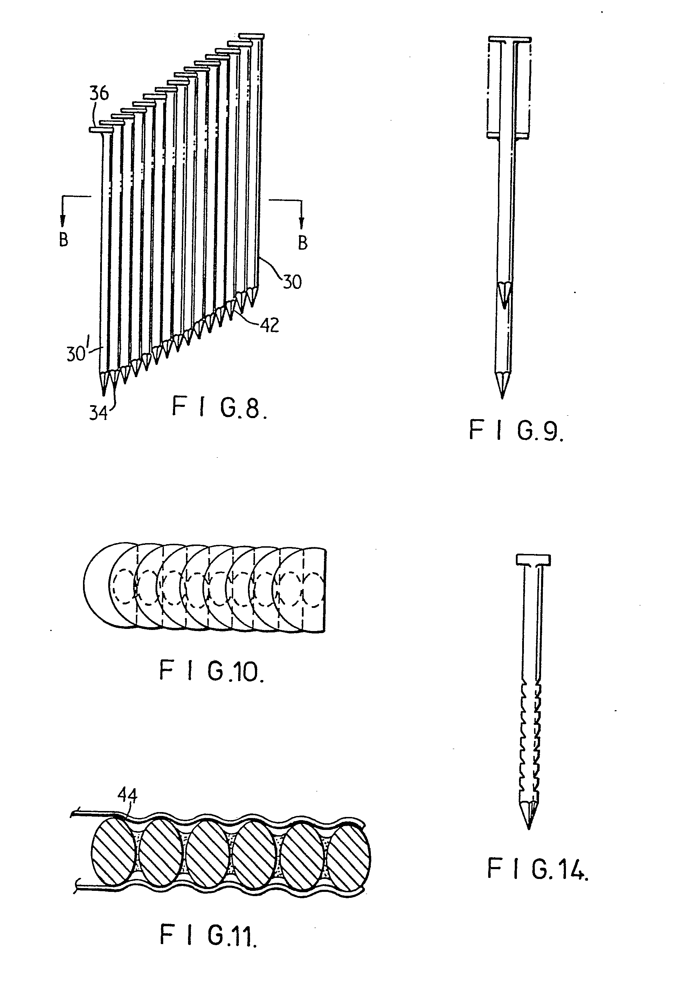

Referring to the embodiment shown in Figures 6 to 11, a steel nail 30 has a shank 32 of oval cross-section, with a point 34 at one end. At its other end is formed a head 36. The head 36 is in the form of an incomplete disc having a segment cut-away to form a "D" shape, providing a chordal edge 38 tangential to the side of the shank i.e. parallel to the major axis 40 of the oval shank. Thus, for use with a nailing machine, a number of similar nails can be collated with their shanks abutting and with the head of one nail overhanging that of the next, forming a stepped strip 42 as shown in Figure 8. The nails could be bonded together in a strip by epoxy resin applied to their sides as at 44, or by lengths of wire or self-adhesive tapes.

In use the hammer of the nailing machine (not shown) will strike the endmost and lowermost nail, 30', severing it from the rest of the strip 42 and driving it into the work to be fastened.

It should be appreciated that in both embodiments, instead of the point illustrated, the nail might have any of the various types of point commonly used, or even no point at all.

In both the above-described embodiments it should be noted that the nails are collated with their sides abutting i.e. with their major axes parallel. Thus the length of magazine for each nail is the same as for a round nail of diameter equal to the minor shank dimension "d" of the oval nail. However, due to its additional cross-sectional area, the oval nail will be stronger and hence could be longer, if desired. Conversely, a greater number of oval nails could be accommodated in the magazine than round nails of similar length and weight - typically about 30% more.

An advantage of the oval shank, at least in relation to nails for use in nailing machines, is that they are easier to align during collation. It will be appreciated that a round shank will rotate,necessitating location on the head itself to ensure the necessary head alignment when the nails are in the strip.

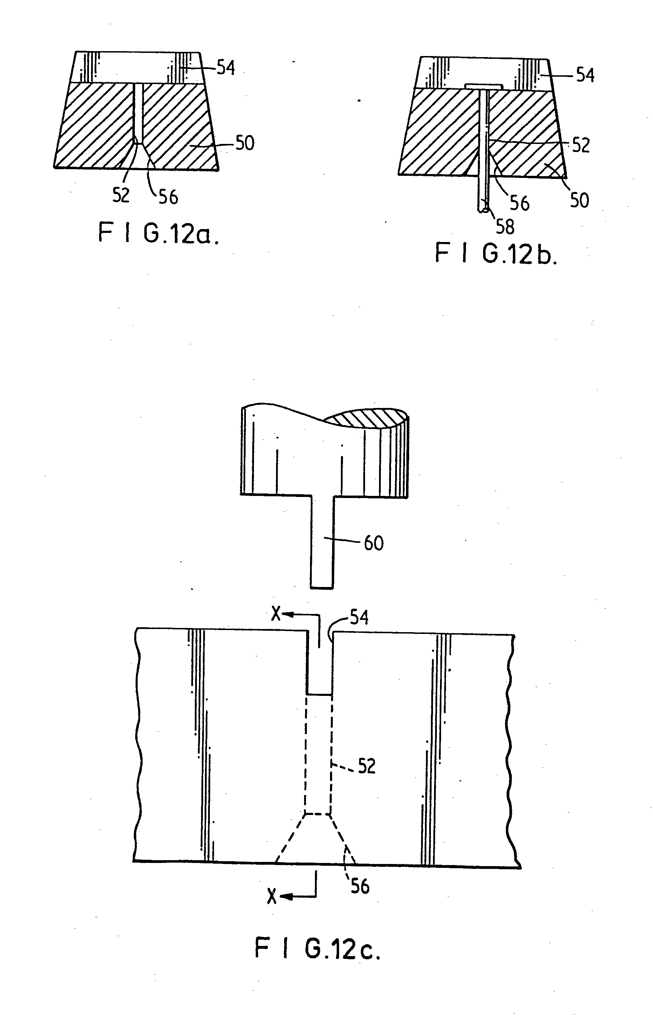

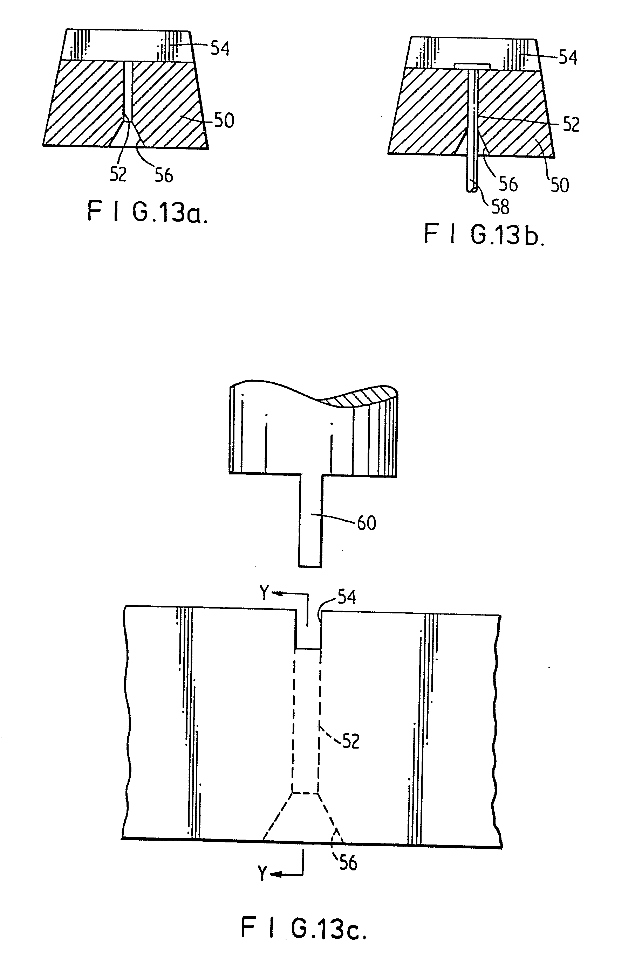

A further benefit of the oval shank is that nails embodying the present invention have better head security than nails of similar weight but with round shanks. This is partly because of the greater area of shank connecting the head. Also, however, the oval shank permits a thicker, stronger head to be formed, more accurately, as will be appreciated by reference to the methods of forming a "T" head illustrated for round and oval nails by Figures 12 and 13 respectively. For convenience corresponding parts in both Figures are identified by the same reference numeral.

Figures 12, (a) and (b) are sectional views on the line XX of Figure 12 (c), which shows a die 50 having a through hole 52 communicating at one end with a slot 54 and having a divergent mouth 56 at its other end. In use, round wire stock 58 is fed through the hole 52 to protrude into the slot 54. The protruding end is then upset by a punch 60 to form a transverse head.

The size of head is limited by the flow characteristics of the metal. The further the head metal is displaced during upsetting, the more it is work hardened and the more brittle it becomes. It will be appreciated that a brittle head is liable to fracture in service. Typically, for round stock the length L i.e. transverse dimension, of the head may be 3.39 times shank diameter D and its depth i.e. axial dimension about 0.57 D.

Referring to Figure 13, oval wire stock having a minor diameter equal to the diameter of the round wire will have a major diameter D' about 1.5 D. For example, minor and major diameters 2.65 and 4.00 mm, respectively. As can be seen from Figure 13 (b), the same head length, L. is equal to 2.25 D'. Therefore the metal forming the head will not flow as far as in the case of the round nail and is less likely to be embrittled. Also, the greater volume of metal available enables a thicker head to be formed, typically about 30% thicker than the equivalent round nail.

Comparing Figures 12(c) and 13(c) it will be noted that the depth of slot 54 is less for the oval nail. For the same size of head, a shorter protrusion is required so there is less likelihood of the protruding portion wavering during upsetting, which could lead to inaccurate alignment and shape of the head. This is particularly important where the nails are to be used in a nailing machine.

The increased strength and head security is such that the nails might even be made from material other than steel, for example aluminium wire of a Quality HG20 having a tensile strength of 38 Kgf/mm$^2$, as specified in British Standard 1475.

It will be appreciated that the improved head security due to the oval shank leads to an increase in the holding power of the nail when in use. Holding power may also be improved by serrating the shank, along one or both edges of the major diameter - i.e. narrower portions of the oval , preferably employing a buttress form as illustrated in Figure 14. The width of the deformed serrations should not exceed the minor diameter of the shank.

In fastening two pieces of wood together the nail is disposed with the major axis of the oval parallel to the grain direction of the upper piece. This reduces the risk of splitting as compared with a round nail of approximately the same length and weight. In most cases, the grain of the underlying piece of wood will be at right angles to that of the upper piece. Hence that part of the nail penetrating the underlying piece will do so with the major axis of the oval across the grain. Accordingly the fibres will close into the serration giving a significant increase in holding power.

Additional holding power may be obtained by coating the shank with cement or epoxy resin, possibly during or after collation by dipping the required length of shank.

It should be noted that the sides of the nail shank which are to be juxtaposed during collation are not serrated. Thus the nails can still be used in a nailing machine.

Applicant:    Rylands-Whitecross Limited

Title:        Improvements in or relating to nails
              and their method of manufacture

### CLAIMS

1.    A nail comprising an elongate shank of oval cross-sectional shape having major and minor transverse axes and, at one end thereof, a head projecting laterally from the shank, wherein a boundary portion of the head lies on or within a notional geometric extension of the shank periphery at least at one position of intersection of said extension and a minor axis plane thereof.

2.    A nail as claimed in claim 1, wherein the head comprises an elongate member having limbs extending in different directions from the shank and a medial portion adjacent the shank, at least the medial portion of the head having a dimension in the direction of the minor axis no greater than the minor diameter of the shank.

3.    A nail as claimed in claim 2, wherein the limbs extend parallel to the major axis of the shank.

4.    A nail as claimed in claim 1, wherein the head comprises an incomplete disc configured to permit collation of a plurality of such nails with shanks abutting along their lengths, their minor axes aligned one with another and their heads overlapping in stepped relation.

5. A nail as claimed in claim 4, wherein the head has a chordal edge tangential to the shank extension at said position of intersection of said extension and a minor axis thereof.

6. A nail as claimed in any preceding claim , wherein the shank has serrations along at least part of its length and along at least one of the opposed smaller radius portions of its oval section.

7. A nail as claimed in claim 6, wherein each serration has a buttress form, with a face converging towards the longitudinal axis of the nail in the direction away from the head, and a shoulder substantially perpendicular to the longitudinal axis.

8. A plurality of nails as claimed in any preceding claim, collated in a strip for use in a nailing machine with their minor axes aligned in the plane of the strip.

9. A method of making a nail as claimed in claim 1, including the step of forming at one end of a shank of oval cross-sectional shape, a head projecting laterally from the shank with a boundary portion of the head lying on or within a notional geometric extension of the shank periphery at least at one position of intersection of said extension and a minor axis thereof.

10. A method as claimed in claim 9, wherein the head is formed by upsetting an end of the shank projecting from a die at least partly of oval cross-section
conforming to that of the shank.

11. A method as claimed in claim 10, wherein the end
is projected into a slot having a width, in the
direction of the minor axis of the shank, which is
substantially equal to the minor diameter of the shank,
the end being upset by a punch acting into the slot.

Agents: ROYSTONS                        P843

0042657

F I G.1.    F I G.2.    F I G.3.

F I G.4.

F I G.5.

F I G.6.

F I G.7.

F I G.8.

F I G.9.

F I G.10.

F I G.11.

F I G.14.

0042657

F I G.12a.

F I G.12b.

F I G.12c.

F I G.13a.

F I G.13b.

F I G.13c.

## European Patent Office

## EUROPEAN SEARCH REPORT

| DOCUMENTS CONSIDERED TO BE RELEVANT | | |
|---|---|---|
| **Category** | **Citation of document with indication, where appropriate, of relevant passages** | **Relevant to claim** |
| | DE - A1 - 2 756 496 (PUBLIPLAST) <br> + Totality + <br> -- | 1 |
| | DE - A1 - 2 711 075 (N.V. BEKAERT-COCKERILL S.A.) <br> + Fig. 2 + <br> -- | 1,4,5,8 |
| | FR - A - 444 218 (BELL & FENNER) <br> + Fig. 4 + <br> -- | 1,2 |
| | US - A - 1 846 709 (P.W. DILLON) <br> + Fig. 4 + <br> -- | 1,2 |
| | CH - A - 506 721 (SENCO PRODUCTS INC.) <br> + Fig. 1,4 + <br> -- | 1,8 |
| | US - A - 3 980 179 (SCHREPFERMANN) <br> + Fig. 23-27 + <br> -- | 1,8 |
| | GB - A - 1 453 640 (EXXON RESEARCH) <br> + Totality + <br> -- | 1,8 |
| | DE - A - 1 908 012 (FA. J.F. BEHRENS) <br> + Fig. 5 + <br> -- | 1,2,8 |
| | DE - B - 1 503 053 (SIGNODE CORP.) <br> + Totality + <br> -- | 1,8 |

**CLASSIFICATION OF THE APPLICATION (Int. Cl.³)**

F 16 B 15/00
F 16 B 15/08
B 25 C 1/00
B 21 G 3/00

**TECHNICAL FIELDS SEARCHED (Int. Cl.³)**

F 16 B 15/00
B 25 C 1/00
B 25 C 3/00
B 21 G 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| **Place of search** VIENNA | **Date of completion of the search** 24-08-1981 | **Examiner** | SCHUGANICH |

EPO Form 1503.1 06.78

Europäisches
Patentamt

**EUROPÄISCHER RECHERCHENBERICHT**

| Kategorie | Kennzeichnung des Dokuments mit Angabe, soweit erforderlich, der Maßgeblichen Teile | betrifft Anspruch |
|---|---|---|
| | US - A - 3 234 572 (G.K. ROSER)<br><br>+ Column 2, line 31 - column 3, line 30; column 3, lines 45-58; fig. 1-3,7 +<br><br>-- | 1-3,6, 8-11 |
| A | US - A - 3 162 871 (R.E. POWERS)<br><br>+ Fig. 2,3,5,6 +<br><br>-- | 1,2,3, 8 |
| A | FR - A1 - 2 418 044 (AKTIESELKABET NORDISKE KABEL OG TRAADFABRIKER)<br><br>+ Fig. 2,11,12 +<br><br>& GB-A-2 014 889<br><br>-- | 1,4,5, 9,10, 11 |
| A | GB - A - 2 034 223 (NORDISK KARTO AKTIEBOLAG)<br><br>+ Fig. 3 +<br><br>---- | 1,6,7 |

**EINSCHLÄGIGE DOKUMENTE**

**KLASSIFIKATION DER ANMELDUNG** (Int. Cl.³)

**RECHERCHIERTE SACHGEBIETE** (Int. Cl.³)

EPA Form 1503.2 06.78